# EUROPÄISCHE PATENTSCHRIFT

(11) **EP 3 400 637 B1**
(45) Veröffentlichungstag und Bekanntmachung des Hinweises auf die Patenterteilung: **24.06.2020**
(21) Anmeldenummer: 17703086.3
(22) Anmeldetag: 31.01.2017
(51) Int. Cl.: H02B 3/00, H02G 5/06

(54) **DEMONTAGE- ODER MONTAGEVERFAHREN FÜR EINE DRUCKFLUIDISOLIERTE ELEKTROENERGIEÜBERTRAGUNGSEINRICHTUNG**
DISSEMBLING OR ASSEMBLING METHOD FOR A PRESSURIZED-FLUID-INSULATED ELECTRIC POWER TRANSMISSION DEVICE
PROCÉDÉ DE MONTAGE OU DE DÉMONTAGE POUR UN DISPOSITIF DE TRANSFERT D'ÉNERGIE ÉLECTRIQUE ISOLÉ PAR FLUIDE SOUS PRESSION

(30) Priorität: 03.03.2016 DE 102016203481
(43) Veröffentlichungstag der Anmeldung: 14.11.2018
(73) Patentinhaber: Siemens Aktiengesellschaft, 80333 München (DE)
(72) Erfinder: FRÖBEL, Sascha, 12555 Berlin (DE); PIETSCHMANN, Marc, 01877 Schmölln-Putzkau (DE); WASSERMANN, Lars, 15746 Gross Köris (DE)
(86) Internationale Anmeldenummer: PCT/EP2017/051962
(87) Internationale Veröffentlichungsnummer: WO 2017/148636

(56) Entgegenhaltungen:
- EP-A1- 2 045 893
- CN-U- 202 353 073
- DE-A1-102014 206 642
- DE-C1- 10 010 728
- US-B1- 8 161 631

## Beschreibung

Die Erfindung bezieht sich auf ein Demontage- oder Montageverfahren für eine druckfluidisolierte Elektroenergieübertragungseinrichtung aufweisend eine Kapselungswandung sowie einem an der Kapselungswandung abstützbaren Phasenleiterabschnitt, wobei zum Verbinden/Lösen des Phasenleiterabschnitts mit der/von der Kapselungswandung ein Werkzeug zum Verbinden/Lösen positioniert wird.

Aus der Offenlegungsschrift DE 10 2011 005 700 A1 ist eine elektrische Kontaktanordnung bekannt. Die elektrische Kontaktanordnung weist einen Phasenleiterabschnitt in Form eines Phasenleiterabschnittes auf, welcher an einer Kapselungswandung abgestützt ist. Die Kapselungswandung weist einen elektrisch isolierenden Abschnitt sowie einen elektrisch leitenden Abschnitt auf. Der Phasenleiterabschnitt ist am elektrisch leitenden Abschnitt der Kapselungswandung mittels einer Schraubverbindung festgelegt. Die Kapselungswandung schützt vor einem unmittelbaren Zugriff durch die Kapselungswandung hindurch. Als solches stellt die Kapselungswandung eine Begrenzung dar. Eine Demontage/Montage an der Kapselungswandung belastet diese mechanisch, so dass gegebenenfalls eine Schutzfunktion der Kapselungswandung durch die Demontage/Montage beeinträchtigt werden kann. Je nach Betriebsort der Elektroenergieübertragungseinrichtung kann eine Gefährdung der Umwelt durch eine Schwächung der Schutzfunktion der Kapselungswandung nicht hingenommen werden.

Der europäischen Offenlegungsschrift EP 2 045 893 A1 ist ein Verfahren zur Demontage von metallgekapselten elektrischen Installationseinrichtungen entnehmbar. Dabei ist zwischen Flanschen ein mehrwinklig geteiltes Distanzstück eingefügt, mittels welchem eine Querbewegung unterstützt wird.

Der Offenlegungsschrift DE 10 2014 206642 A1 ist eine elektrische Kontaktanordnung entnehmbar, wobei dort mittels einer zentralen Verspanneinrichtung konvex bzw. konkav gekrümmte Abschnitte von zu verbindenden Leiterabschnitten miteinander gekoppelt sind.

Dem Patent US 8 161 631 B1 ist ein Werkzeug entnehmbar, mittels welchem eine Wartung von elektrischen Schaltgeräten unter Spannung vorgenommen werden kann.

Der Patentschrift DE 100 10 728 C1 ist eine dreiphasige Sammelschiene einer Hochspannungsanlage entnehmbar. Dort ist vorgesehen, einen Phasenleiter endseitig mit Armaturkörpern elektrisch leitend zu verbinden, wobei einerseits eine Verschraubung und andererseits eine buchsenartige Steckverbindung vorgeschlagen sind.

Dem chinesischen Gebrauchsmuster CN 202 353 073 U ist ein Kapselungsgehäuse entnehmbar, welches zum Zwecke einer Demontage desselben einen formveränderbaren Wandungsabschnitt aufweist.

Somit ergibt sich als Aufgabe der Erfindung ein Demontage-/Montageverfahren der eingangs genannten Art anzugeben, welches die Wahrscheinlichkeit einer Gefährdung der Umgebung während einer Montage an der druckfluidisolierten Elektroenergieübertragungseinrichtung reduziert.

Erfindungsgemäß wird diese Aufgabe bei einem Montageverfahren der eingangs genannten Art dadurch gelöst, dass
- vor einem Betätigen des Werkzeugs eine Sicherheitszone bezüglich einer Gefährdung durch ein Zerbersten der Kapselungswandung festgelegt wird und dass
- eine Betätigung des Werkzeugs von außerhalb der Sicherheitszone erfolgt.

Eine druckfluidisolierte Elektroenergieübertragungseinrichtung dient der Übertragung elektrischer Energie. Dabei ist ein Phasenleiter, welcher einer Leitung eines elektrischen Stromes dient, zumindest teilweise mittels einer Druckfluidisolation elektrisch isoliert. Eine Druckfluidisolation ist dabei (zumindest teilweise) durch eine Kapselungswandung begrenzt, d. h. die Druckfluidisolation vermag es nicht die Kapselungswandung zu durchsetzen. Folglich ist mittels der Kapselungswandung ein Verflüchtigen des Druckfluides verhindert. Eine Druckbeaufschlagung einer Fluidisolation kann weiterhin dazu dienen, eine elektrische Isolationsfestigkeit des eingesetzten Fluides positiv zu beeinflussen. Als elektrisch isolierende Fluide eignen sich beispielsweise fluorhaltige Verbindungen wie Schwefelhexafluorid, Fluornitrile und Fluorketone. Alternativ können jedoch auch Stickstoff, Kohlendioxid, gereinigte Luft, Clean Air usw. sowie andere geeignete elektronegative Fluide zum Einsatz gelangen. Das Fluid kann dabei in der druckfluidisolierten Elektroenergieübertragungseinrichtung im gasförmigen Zustand oder im flüssigen Zustand vorliegen. Bedarfsweise kann das Fluid innerhalb der Elektroenergieübertragungseinrichtung in verschiedenen Zuständen gegebenenfalls gemischt vorliegen. Die Kapselungswandung kann dabei Teil eines druckfluiddichten Gehäuses sein.

Mittels eines Werkzeuges kann ein Verbinden oder Lösen einer Verbindung, welche die Kapselungswandung sowie das abzustützende Bauteil relativ zueinander fixiert vorgenommen werden. Beispielsweise können als Werkzeug Vorrichtungen eingesetzt werden, welche einen stoffschlüssigen Verbund und/oder kraftschlüssigen und/oder reibschlüssigen Verbund oder einen weiteren geeigneten Verbund herstellen/auflösen können. Ein Phasenleiterabschnitt (Anbauteil) kann einer Führung eines elektrischen Stromes in einem Abschnitt des Phasenleiters dienen. Der Phasenleiterabschnitt kann dabei einen Teil eines Verlegeweges des Phasenleiters ausbilden. Beispielsweise kann der Phasenleiter sich auch innerhalb der Kapselungswandung gegebenenfalls durch die Kapselungswandung erstrecken und einen Teil der Kapselungswandung ausbilden. Bedarfsweise kann auch vorgesehen sein, dass die Kapselungswandung lediglich abschnittsweise fluiddicht ausgebildet ist und beispielsweise auch einen Übertritt eines Fluides gegebenenfalls über einen steuerbaren Kanal zugelassen ist. Ein fluiddichter Abschnitt der Kapselungswandung kann einem Differenzdruck widerstehen.

Ein Positionieren des Werkzeuges ermöglicht es, den Phasenleiterabschnitt und die Kapselungswandung relativ zueinander festzulegen bzw. voneinander zu lösen. Um ein korrektes Ausführen einer Verbindung bzw. Trennung des Phasenleiterabschnittes mit bzw. von der Kapselungswandung zu ermöglichen, ist eine Positionierung des Werkzeuges vorgesehen. Dabei erfolgt das Positionieren derart, dass während des Positionierens eine Beeinflussung des Zustandes der Verbindung zwischen Kapselungswandung und Phasenleiterabschnitt noch nicht erfolgt. Damit ist zunächst ein gefahrloses Positionieren des Werkzeuges möglich, ohne beispielsweise innerhalb einer Sicherheitszone befindliches Personal zu gefährden. Nach oder auch während eines Positionierens des Werkzeuges kann bereits ein Vorbereiten des Verbindens bzw. Lösens von Phasenleiterabschnitt und Kapselungswandung erfolgen. Beispielsweise kann ein handfestes Anziehen von Schraubenverbindungen erfolgen.

Bei einer Störung an der Kapselungswandung, d. h. beispielsweise bei einem Zerbersten derselben kann eine Gefährdung insbesondere von Personen und Material auftreten. Nach Abschluss des Rüstens des Werkzeuges werden Personen aus einer festgelegten Sicherheitszone entfernt. Die Sicherheitszone kann verschiedenartig gesichert sein. Beispielsweise kann ein Abschranken mittels einer geschlossenen Barriere erfolgen. Die Barriere sollte über eine ausreichende Widerstandsfestigkeit verfügen. Als Barriere können beispielsweise auch Wände von Baukörpern dienen. Es kann jedoch auch vorgesehen sein, dass lediglich eine optische Absperrung/Festlegung der Sicherheitszone vorgenommen wird. Durch eine entsprechend große Dimensionierung der Sicherheitszone kann sichergestellt werden, dass außerhalb der Sicherheitszone selbst bei einer Störung der Kapselungswandung keine Beeinträchtigung oder lediglich eine hinnehmbare Gefährdung von Mensch und Material zu erwarten ist.

Nach einem Festlegen der Sicherheitszone kann von einem Ort außerhalb der Sicherheitszone eine Betätigung des Werkzeugs vorgenommen werden. Eine derartige Betätigung kann dabei z. B. schnurgebunden oder schnurlos vorgenommen werden. Das Werkzeug ist bevorzugt ein fernbedienbares Werkzeug. Gegebenenfalls kann bereits ein Positionieren des Werkzeuges fernbedient erfolgen.

Ein Positionieren des Werkzeuges kann relativ zur Kapselungswandung und/oder zum Phasenleiterabschnitt erfolgen. Dabei kann ein Ausrichten des Werkzeuges relativ zur Kapselungswandung und/oder zum Phasenleiterabschnitt vorgenommen werden. Beispielsweise können Kapselungswandung und/oder Phasenleiterabschnitt entsprechende Markierungen aufweisen, die einer Ausrichtung einer definierten Lage des Werkzeuges dienen. Entsprechend der Markierungen kann eine Lagefestlegung des Werkzeuges erfolgen. So kann beispielsweise eine trigonometrische Positionierung des Werkzeuges vorgenommen werden. Bevorzugt kann eine formkomplementäre Ausbildung der Markierung und des Werkzeuges vorgesehen sein.

Eine weitere vorteilhafte Ausgestaltung kann vorsehen, dass das Werkzeug durch eine Öffnung eines den Phasenleiterabschnitt und/oder die Kapselungswandung zumindest teilweise umgebenden Gehäuses eingeführt wird.

Der Phasenleiterabschnitt und/oder die Kapselungswandung kann/können zumindest teilweise von einem Gehäuse umgeben sein. Beispielsweise kann die Kapselungswandung das Gehäuse und ein weiteres Gehäuses verschließen, so dass die Kapselungswandung eine separierende Barriere zwischen dem Gehäuse sowie dem weiteren Gehäuse darstellt. Das Gehäuse kann dabei eine Öffnung aufweisen, durch welche das Werkzeug in das Gehäuse eingeführt wird. Beispielsweise kann das Gehäuse im Wesentlichen rotationssymmetrisch ausgebildet sein, wobei die Öffnung bevorzugt mantelseitig an dem Gehäuse angeordnet ist. Als Öffnung kann beispielsweise eine Flanschöffnung, insbesondere eine mantelseitige Flanschöffnung, an dem Gehäuse dienen. Dabei kann das Werkzeug relativ zu der Öffnung und/oder relativ zum Phasenleiterabschnitt und/oder relativ zur Kapselungswandung ausgerichtet werden. Das Gehäuse kann eine fluiddichte Wandung aufweisen. Das Gehäuse kann einen Fluidaufnahmeraum begrenzen. Der Fluidaufnahmeraum kann weiter durch die Kapselungswandung begrenzt sein. Durch ein Gehäuse kann ein zusätzlicher Schutz gewährleistet werden, falls während einer Montage eine Störung an der Kapselungswandung auftritt. Das Gehäuse kann als Fangeinrichtung bzw. Deflektor für Bruchstücke wirken. Beim Umgeben des Phasenleiterabschnittes und/oder der Kapselungswandung mittels des Gehäuses bildet das Gehäuse einen Schild. Durch das Gehäuse ist so ein Zugriff auf den Phasenleiterabschnitt und/oder die Kapselungswandung gesperrt. Lediglich aus einer zugelassenen Richtung kann gegebenenfalls auf den Phasenleiterabschnitt und/oder die Kapselungswandung zugegriffen werden. Ein Umgriff kann insbesondere durch einen bewegbaren Abschnitt des Gehäuses erfolgen.

Weiterhin kann vorteilhaft vorgesehen sein, dass vor einem Einführen des Werkzeugs in die Öffnung eine Druckentlastung des Gehäuses vorgenommen wird.

Eine druckfluidisolierte Elektroenergieübertragungseinrichtung dient einer Aufnahme eines elektrisch isolierenden Fluids unter Überdruck. Entsprechend kann das Gehäuse ein druckbelastetes Fluid begrenzen. Vor einem Einführen des Werkzeuges in die Öffnung kann das Gehäuse druckentlastet werden. Beispielsweise kann während einer Druckbeaufschlagung die Öffnung fluiddicht verschlossen sein. Nach einer Druckentlastung des Gehäuses kann die Öffnung geöffnet werden. Dabei sollte vor einem Öffnen der Öffnung zum Einführen des Werkzeuges eine Prüfung des Druckes innerhalb des Gehäuses vorgenommen werden, um Unfälle zu vermeiden. Dabei kann weiterhin vorgesehen sein, dass aufgrund der Entspannung des Gehäuses sich an der Kapselungswandung eine Druckdifferenz beispielsweise gegenüber einem Fluidaufnahmeraum eines sich an das Gehäuse anschließenden weiteren Gehäuses einstellt. Das weitere Gehäuse (bzw. dessen Fluidaufnahmeraum) kann dabei unter Druck stehen, so dass zwischen den beiden Gehäusen ein Differenzdruck anliegt, welchem die Kapselungswandung widersteht.

Eine weiter vorteilhafte Ausgestaltung kann vorsehen, dass das Werkzeug an einem Teil der zu demontierenden/montierenden Elektroenergieübertragungseinrichtung abgestützt wird.

Eine Abstützung des Werkzeuges an einem Teil der zu demontierenden/montierenden Elektroenergieübertragungseinrichtung weist den Vorteil auf, dass beispielsweise Widerlagerkräfte für das Werkzeug durch die Elektroenergieübertragungseinrichtung aufgebracht werden können. Beispielsweise kann als Widerlager eine Körperkante eines Gehäuses genutzt werden. Insbesondere bei Verwendung eines Flansches zum Begrenzen einer Öffnung kann der Flansch genutzt werden, um ein Abstützen des Werkzeuges zu ermöglichen. Beispielsweise kann die Öffnung dazu dienen, die Relativlage des Werkzeuges zum Kapselungsgehäuse festzulegen. Alternativ oder ergänzend kann jedoch auch vorgesehen sein, das Werkzeug zumindest teilweise am Phasenleiterabschnitt anliegen zu lassen. Beispielsweise kann das Werkzeug sich am Phasenleiterabschnitt anlehnen, so dass insbesondere bei einer Abstützung des Werkzeuges sowohl am Gehäuse als auch am Phasenleiterabschnitt eine Relativlage zwischen Werkzeug und zu montierender Elektroenergieübertragungseinrichtung gegeben ist. Über das Werkzeug kann eine Stabilisierung des Phasenleiterabschnittes erfolgen. Vorteilhafterweise kann die Kapselungswandung relativ zur Öffnung eine ortsfeste Relativposition aufweisen. Um das Werkzeug relativ zum Phasenleiterabschnitt zu positionieren, können Werkzeug und Phasenleiterabschnitt miteinander in Kontakt, z. B. in Formschluss, gebracht werden.

Weiterhin kann vorteilhaft vorgesehen sein, dass nach einem Betätigen des Werkzeugs zum Lösen von Phasenleiterabschnitt und Kapselungswandung das Gehäuse zumindest abschnittsweise relativ zur Kapselungswandung und/oder zum Phasenleiterabschnitt bewegt, insbesondere entfernt, wird.

Das Gehäuse kann genutzt werden, um ein Schutzschild auszubilden, welcher bei einer Störung an der Kapselungswandung gegebenenfalls fortgeschleuderte Partikel bremst. Wird nach einem erfolgten Lösen des Phasenleiterabschnittes von der Kapselungswandung das Gehäuse zumindest abschnittsweise entfernt, so kann ein vergrößerter Zugang geschaffen werden, welcher über die Möglichkeiten der im Gehäuse zur Verfügung gestellten Öffnung hinaus reicht. Beispielsweise ist es nunmehr möglich, den Phasenleiterabschnitt aus dem Gehäuse zu entfernen oder auch Reparaturen vorzunehmen. Zu diesem Zeitpunkt ist ein kritischer Teil der Montage, nämlich das Lösen der Verbindung, bereits vorgenommen worden, wobei während dieses Lösens besonders hohe Belastungen auf die Kapselungswandung einwirken können. Entsprechend wird durch das Gehäuse während der Montage (während der Betätigung des Werkzeugs) ein zusätzlicher Schutz gestellt. Eine Bewegung des Gehäuses kann zu einem Entfernen von der Kapselungswandung führen. Insbesondere kann ein im Wesentlichen lotrechtes Bewegen z. B. Verschieben des Gehäuses von der Kapselungswandung erfolgen. Durch eine Bewegung kann ein Umgriff des Phasenleiterabschnittes und/oder der Kapselungswandung aufgelöst werden.

Vorteilhafterweise kann weiter vorgesehen sein, dass vor einem Betätigen des Werkzeugs zum Verbinden von Phasenleiterabschnitt und Kapselungswandung das Gehäuse zumindest abschnittsweise relativ zur Kapselungswandung und/oder zum Phasenleiterabschnitt bewegt, insbesondere angenähert, wird.

Vor einem Betätigen des Werkzeugs zum Verbinden von Phasenleiterabschnitt und Kapselungswandung kann das Gehäuse relativ zur Kapselungswandung bewegt werden. Beispielsweise kann das Gehäuse zumindest abschnittsweise in Richtung der Kapselungswandung bewegt werden, so dass um die Kapselungswandung herum ein Schutzschirm gebildet ist. So kann beispielsweise nach einem erfolgten Austausch eines Phasenleiterabschnittes das Gehäuse wieder geschlossen werden und das Gehäuse kann zusätzlich während der sich anschließenden Montage eine Schutzfunktion übernehmen. Eine zumindest abschnittsweise Bewegung des Gehäuses kann der Bildung eines Berstschutzes dienen. Durch eine Bewegung kann ein Umgriff des Phasenleiterabschnittes und/oder der Kapselungswandung wieder hergestellt werden.

Eine Bewegung des Gehäuses relativ zur Kapselungswandung und/oder zum Phasenleiterabschnitt kann bevorzugt quer zur Barrierewirkung der Kapselungswandung vorgenommen werden. So kann beispielsweise ein lotrechtes Verschieben zumindest eines Abschnittes des Gehäuses relativ zur Kapselungswandung vorgesehen sein. Insbesondere bei einem im Wesentlichen rotationssymmetrischen Gehäuse ist ein Bewegen in Richtung der Rotationsachse von Vorteil. Beispielsweise kann das Gehäuse abschnittsweise formveränderlich, ausgebildet sein. Beispielsweise kann ein sogenannter Faltenbalg eingesetzt werden, weleher eine Relativbewegung eines Abschnittes des Gehäuses relativ zu einem verbleibenden Abschnitt des Gehäuses bzw. zur Kapselungswandung ermöglicht, wobei ein fluiddichter Verbund über den Faltenbalg gewährleistet ist. Funktionsgleich kann jedoch auch vorgesehen sein, dass das Gehäuse nach Art eines teleskopierbaren Elementes, d. h. einzelne Gehäuseabschnitte können ineinander geschoben werden, ausgebildet sein. In diesem Falle ist eine entsprechende Dichtung im Überlappungsbereich von Gleitflächen zwischen einzelnen Abschnitten des Gehäuses vorzusehen. Vorteilhaft kann vorgesehen sein, dass die Öffnung unabhängig von einer Bewegung zumindest eines Abschnittes des Gehäuses relativ zur Kapselungswandung ortsfest verbleibt. Öffnung und Kapselungswandung können gleichbleibende Relativlage einnehmen. Beispielsweise kann ein winkelstarrer Verbund vorliegen.

Eine weitere vorteilhafte Ausgestaltung kann vorsehen, dass ein Verbinden oder Lösen des Phasenleiterabschnittes mit oder von einer differenzdruckbelasteten Kapselungswandung, insbesondere einer elektrisch isolierenden Kapselungswandung, erfolgt.

Eine differenzdruckbelastete Kapselungswandung weist eine ausreichende mechanische Stabilität auf, um einem Differenzdruck standzuhalten. Entsprechend ist die Kapselungswandung auch geeignet, Montagekräfte zum Verbinden/Lösen von Kapselungswandung und Phasenleiterabschnitt aufzunehmen. Entsprechend kann die Kapselungswandung auch als Widerlager beispielsweise für ein Erzeugen eines kraftschlüssigen Verbundes zwischen Phasenleiterabschnitt und Kapselungswandung dienen. Dabei kann die Kapselungswandung elektrisch isolierend wirken. Die Kapselungswandung kann dazu zumindest abschnittsweise elektrisch isolierende Bereiche aufweisen. Beispielsweise kann die Kapselungswandung nach Art eines Scheibenisolators ausgebildet sein, in welchen beispielsweise ein Armarturkörper eingebettet ist, welcher ein Teil eines Phasenleiters ist, wobei beispielsweise der Phasenleiterabschnitt ein Phasenleiterabschnitt ist, welcher am Armarturkörper, welcher bevorzugt in einem elektrisch isolierenden Bereich der Kapselungswandung eingebettet ist, abzustützen ist. Eine elektrisch isolierende Kapselungswandung kann einer elektrisch isolierenden Positionierung eines Phasenleiters dienen.

Im Folgenden wird ein Ausführungsbeispiel der Erfindung schematisch in einer Zeichnung gezeigt und nachfolgend näher beschrieben. Dabei zeigt die
- Figur 1:: eine Außenansicht einer druckfluidisolierten Elektroenergieübertragungseinrichtung, die
- Figur 2:: die aus der Figur 1 bekannte Elektroenergieübertragungseinrichtung mit geöffneter Öffnung, die
- Figur 3:: die aus Figur 1 bekannte Elektroenergieübertragungseinrichtung mit in die geöffnete Öffnung eingeführtem Werkzeug, die
- Figur 4:: eine Betätigung des Werkzeuges, die
- Figur 5:: einen Schnitt durch die aus den Figuren 1 bis 4 bekannte Elektroenergieübertragungseinrichtung und die
- Figur 6:: den aus Figur 5 bekannten Schnitt mit einem bewegten Abschnitt eines Gehäuses.

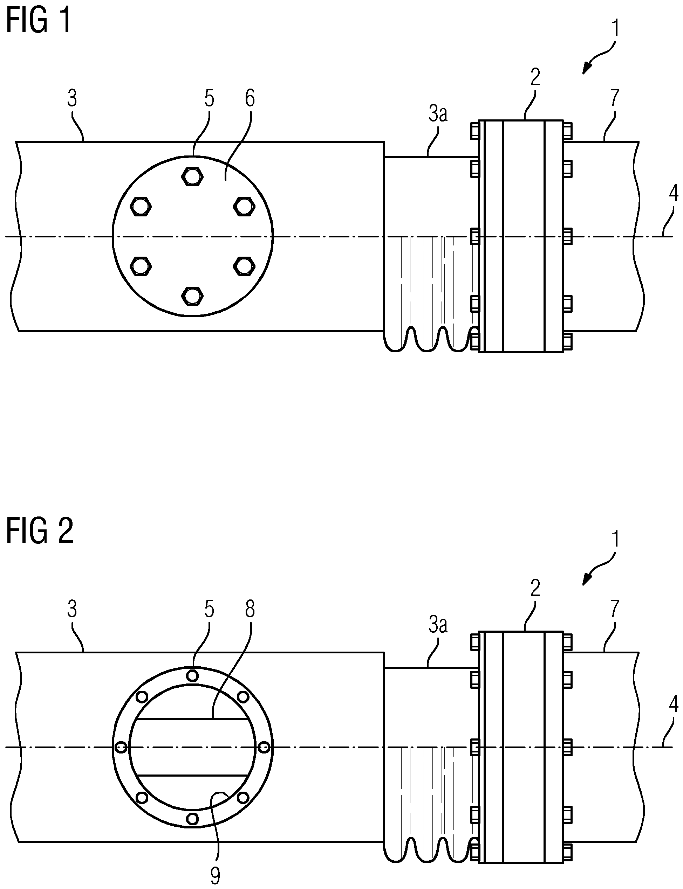

Die Figur 1 zeigt eine druckfluidisolierte Elektroenergieübertragungseinrichtung 1, welche eine Kapselungswandung 2 aufweist. Die Kapselungswandung 2 wird zumindest teilweise von einem Gehäuse 3 umgeben. Das Gehäuse 3 begrenzt gemeinsam mit der Kapselungswandung 2 einen Fluidaufnahmeraum im Inneren des Gehäuses 3. Bevorzugt kann das Gehäuse 3 unter Zuhilfenahme der Kapselungswandung 2 den Fluidaufnahmeraum fluiddicht abschließen. Das Gehäuse 3 ist im Wesentlichen hohlzylindrisch ausgeformt und erstreckt sich koaxial zu einer Längsachse 4. Mantelseitig am Gehäuse 3 ist ein Flansch 5 angeordnet. Der Flansch 5 ist von einem Flanschdeckel 6 verschlossen. Der Flanschdeckel 6 verschließt das Gehäuse 3 fluiddicht. Das Gehäuse 3 weist einen längenvariablen Abschnitt 3a auf. Mittels des längenvariablen Abschnittes 3a ist das Gehäuse 3 zumindest teilweise von der Kapselungswandung 2 entfernbar. In den Figuren ist der längenvariable Abschnitt 3a beispielhaft in zwei Ausführungsvarianten dargestellt. Oberhalb der Längsachse 4 ist der längenvariable Abschnitt 3a durch eine Teleskopanordnung des Gehäuses 3 gebildet. Unterhalb der Längsachse 4 ist der längenvariable Abschnitt 3a durch einen elastisch verformbaren Faltenbalg gebildet. In einer alternativen Ausgestaltung kann auch auf einen längenvariablen Abschnitt verzichtet werden.

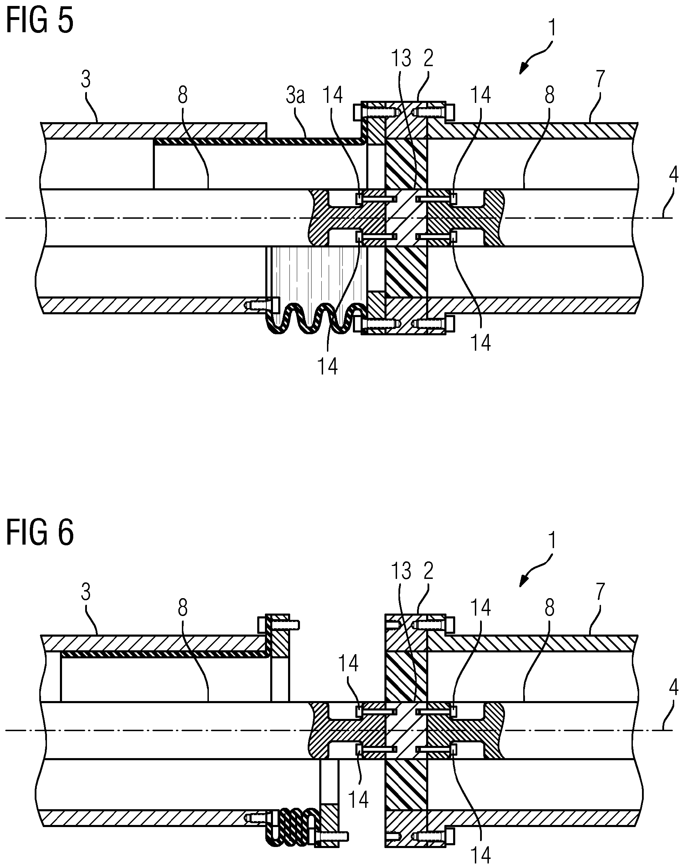

Die Kapselungswandung 2 weist einen im Wesentlichen kreisförmigen Querschnitt auf, wobei eine Kreisform in Richtung der Projektion der Längsachse 4 vorliegt. Die Kapselungswandung 2 begrenzt einen Fluidaufnahmeraum des Gehäuses 3. Weiterhin begrenzt die Kapselungswandung 2 ein Fluidaufnahmeraum eines weiteren Gehäuses 7. Das weitere Gehäuse 7 ist im Wesentlichen baugleich zum Gehäuse 3 ausgebildet und ist fluchtend zur Längsachse 4 ausgerichtet. Es kann auch eine abweichende Bauform aufweisen. Die beiden Gehäuse 3, 7 sind unter Zwischenanordnung der Kapselungswandung 2 voneinander fluidisch getrennt sowie mechanisch gekoppelt. So begrenzt die Kapselungswandung 2 einen Fluidaufnahmeraum gemeinsam mit dem Gehäuse 3. Weiterhin begrenzt die Kapselungswandung 2 auch einen Fluidaufnahmeraum gemeinsam mit dem weiteren Gehäuse 7. Die Fluidaufnahmeräume der beiden Gehäuse 3, 7 sind durch die Kapselungswandung 2 voneinander separiert. Das Innere des Gehäuses 3 ist mit einem elektrisch isolierenden Fluid insbesondere unter Überdruck befüllt. Vor einem Lösen bzw. einem Verbinden eines Phasenleiterabschnittes 8 ist das Gehäuse 3 zu leeren, so dass ein Überdruck im Inneren (im Fluidaufnahmeraum) des Gehäuses 3 abgebaut wird, sofern dieser Zustand noch nicht vorliegt. Bevorzugt sollte das Gehäuse 3 vor einem Öffnen desselben in seinem Fluidaufnahmeraum annähernd denselben Druck aufweisen wie die Umgebung des Gehäuses 3. Vor einem Öffnen des Flanschdeckels 6 ist der Druckzustand im Inneren des Gehäuses 3, also im Fluidaufnahmeraum zu prüfen. Anschließend kann ein Entfernen des Flanschdeckels 6 vorgenommen werden. Der Flansch 5 stellt eine Öffnung 9 zur Verfügung, welcher einen Zugang zum Fluidaufnahmeraum des Gehäuses 3 ermöglicht. In der Figur 2 ist dieser Zustand dargestellt. Durch die Öffnung 9 ist im Inneren des Gehäuses 1, d. h. innerhalb des Fluidaufnahmeraumes ein Phasenleiterabschnitt 8 erkenntlich. Der Phasenleiterabschnitt 8 ist vorliegend ein Phasenleiterabschnitt, welcher einer Führung eines elektrischen Stromes dient. Der Phasenleiterabschnitt ist dabei von einem elektrisch isolierenden Fluid (im Betriebszustand der Elektroenergieübertragungseinrichtung) 1 umspült. Das elektrisch isolierende Fluid ist innerhalb des Gehäuses 3 eingekapselt. Der abzustützende Phasenleiterabschnitt 8 ist dabei im Betriebszustand der Elektroenergieübertragungseinrichtung an der Kapselungswandung 2 abgestützt (vgl. Schnittdarstellungen der Figuren 5 und 6). Der abzustützende Phasenleiterabschnitt 8 ist dabei ein Abschnitt (Phasenleiterabschnitt) eines Phasenleiters, welcher sich entlang der Längsachse 4 erstreckt. Der Phasenleiter passiert dabei die Kapselungswandung 2, wobei der Phasenleiter die Kapselungswandung 2 abschnittsweise ausbildet (hier als Armaturkörper 13).

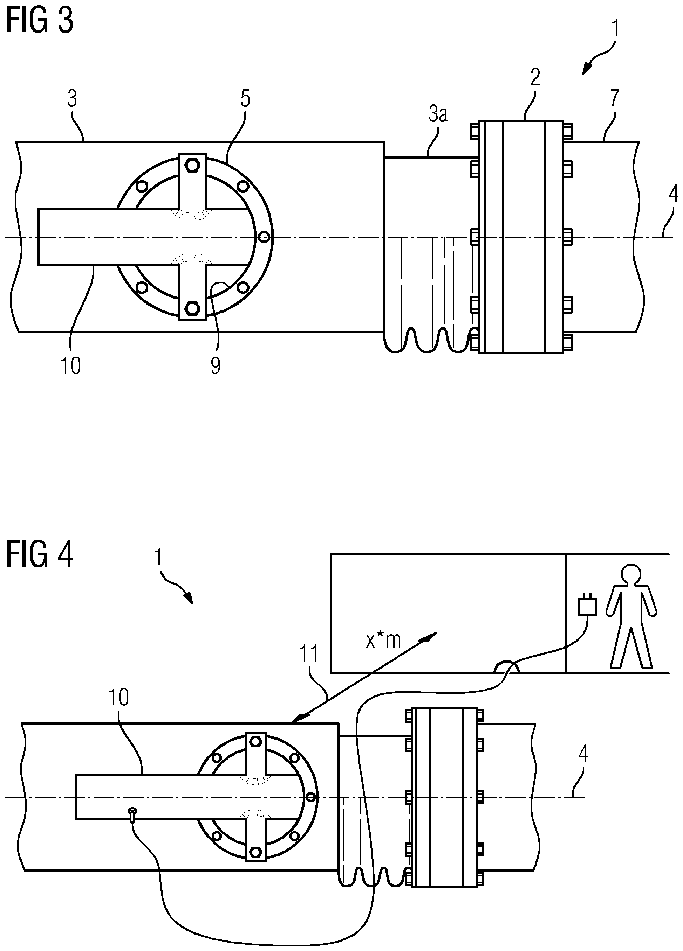

Zum Lösen des Phasenleiterabschnittes 8 von der Kapselungswandung 2 wird ein Werkzeug 10 in die Öffnung 9 eingeführt. Das Werkzeug 10 wird dabei in Position gebracht und ausgerichtet, um eine Verbindung zwischen dem Phasenleiterabschnitt 8 sowie der Kapselungswandung 2 zu lösen. Dabei stützt sich das Werkzeug 10 zum einen am Gehäuse 3, insbesondere am Flansch 5 ab. Dadurch ist die Relativlage zur Kapselungswandung 2 sowie zum Phasenleiterabschnitt 8 gegeben (Fig. 3). Das Gehäuse 3 dient als Widerlager zur Aufnahme von Kräften für das Werkzeug 10. Zusätzlich oder alternativ kann sich das Werkzeug 10 auch am Phasenleiterabschnitt 8 abstützen. Nach erfolgter Positionierung und Rüstung des Werkzeuges 10 (Verspannen einer Verbindung) kann mit der weiteren Montage fortgefahren werden. Dazu erfolgt ein Festlegen einer Sicherheitszone 11. Je nach Gefährdungspotential kann die Sicherheitszone 11 verschiedene Dimensionen aufweisen. Die Sicherheitszone 11 kann beispielsweise durch das Aufstellen einer Barriere 12 abgeschrankt werden. Vorliegend ist die Verwendung einer optisch durchlässigen Barriere 12 vorgesehen, so dass eine optische Kontrolle eines Montagefortschrittes auch hinter der Barriere 12, d. h. außerhalb der Sicherheitszone 11 erfolgen kann. Das Werkzeug 10 wird außerhalb der Sicherheitszone 11 mittels einer Fernbedienung fernbedient. Beispielhaft ist eine schnurgebundene Fernbedienung abgebildet. Nach einem erfolgten (An-)Lösen der Verbindung von Phasenleiterabschnitt 8 und Kapselungswandung 12 kann das Werkzeug 10 aus der Öffnung entnommen werden. Gegebenenfalls können weitere Schritte, z. B. ein weiteres Abschrauben von Muttern vor oder nach der Entnahme des Werkzeugs 10, vorgenommen werden. Dazu kann beispielsweise die Öffnung 9 dienen.

Vorliegend ist vorgesehen, dass der längenvariable Abschnitt 3a des Gehäuses 3 genutzt wird, um eine vergrößerte Zugriffsmöglichkeit auf den Phasenleiterabschnitt 8 bzw. die Kapselungswandung 2 zu gewährleistet. Dazu wird die Verbindung zwischen dem Gehäuse 3 und der Kapselungswandung 2 gelöst und es erfolgt eine Verschiebung eines Teils des Gehäuses 3 in Richtung der Längsachse 4. Dadurch wird das Gehäuse 3 zumindest teilweise von der Kapselungswandung 2 entfernt. Entsprechend ergibt sich aus radialer Richtung ein vereinfachter Zugriff auf den Phasenleiterabschnitt 8 sowie die Kapselungswandung 2. Ein Öffnen bzw. Entfernen des Gehäuses 1 von der Kapselungswandung 2, d. h. eine relative Bewegung zumindest von Teilen des Gehäuses 3 zur Kapselungswandung 2 und/oder zum Phasenleiterabschnitt 8, weist den Vorteil auf, dass während eines Lösens der Befestigung von Phasenleiterabschnitt 8 sowie Kapselungswandung 2 ein schützender Schild um den Phasenleiterabschnitt 8 durch das Gehäuse 3 verbleibt. Somit ist insbesondere zu dem Zeitpunkt, in welchem ein erstes Lösen (bzw. bei umgekehrtem Ablauf ein finales Anziehen) der Verbindung zwischen Phasenleiterabschnitt 8 und Kapselungswandung 2 erfolgt, ein Schutz durch eine geschlossene Wandung des Gehäuses 3 gegeben. Eventuell auftretende Folgen einer Störung an der Kapselungswandung 2 können so abgemildert werden. Nach einem erfolgten Lösen/Anziehen, also nach Ablauf der risikoreichen Löse- bzw. Befestigungstätigkeit ist es nunmehr möglich, das Gehäuse 3 zumindest teilweise relativ zur Kapselungswandung 2 bzw. relativ zum Phasenleiterabschnitt 8 zu bewegen.

Bei umgekehrtem Ablauf erfolgt ein Verbinden eines Phasenleiterabschnittes 8 mit der Kapselungswandung 2. Durch die Entfernung des Gehäuses 3 von der Kapselungswandung 2 ist ein radialer Zugriff auf das Innere des Gehäuses 3 möglich. Somit kann beispielsweise eine Vormontage eines Phasenleiterabschnittes 8 oder auch ein Einbringen oder Austauschen des Phasenleiterabschnittes 8 über den vom Gehäuse befreiten Abschnitt erfolgen. Vor einem Befestigen, z. B. einem finalen Anziehen von Bolzen, wird nunmehr das Gehäuse 3 relativ zur Kapselungswandung 2 bzw. relativ zum Phasenleiterabschnitt 8 bewegt, so dass ein radialer Umgriff des Phasenleiterabschnittes 8 sowie der Kapselungswandung 2 durch das Gehäuse 3 gegeben ist. Nunmehr kann über das Werkzeug 10 (welches vor oder nach einem Annähern des Gehäuses 3 in die Öffnung 9 eingesetzt wird) ein Anziehen der Verbindung zwischen Phasenleiterabschnitt 8 und Kapselungswandung 2 erfolgen. Dieses mit erhöhtem Risiko verbundene Anziehen, d. h. ein Einleiten von Kräften in die Kapselungswandung 2, kann nunmehr wieder unter Nutzung des Gehäuses 3 als Schild erfolgen. Um ein Herstellen der Verbindung vorzunehmen, kann nunmehr das Werkzeug 10 relativ zur Kapselungswandung 2 bzw. zum Gehäuse 3 und/oder zum Phasenleiterabschnitt 8 eine vorgegebene Relativlage einnehmen, so dass durch ein Fernbetätigen des Werkzeugs 10 ein Herstellen der Verbindung zwischen Phasenleiterabschnitt 8 und Kapselungswandung 2 erfolgt. Danach kann das Werkzeug 10 aus der Öffnung 9 entnommen werden. Die Öffnung 9 kann mittels des Flanschdeckels 6 verschlossen werden, so dass ein Verschließen des Fluidaufnahmeraumes des Gehäuses 3 gegeben ist. Nunmehr kann ein Befüllen des Fluidaufnahmeraumes mit einem elektrisch isolierenden Fluid erfolgen. Dadurch kann ein Differenzdruck, welcher zwischen den Fluidaufnahmeräumen des Gehäuses 3 sowie des weiteren Gehäuses 7 vorliegt, reduziert werden. Bevorzugt kann eine nahezu vollständige Reduzierung des Differenzdruckes erzielt werden, indem innerhalb des Fluidaufnahmeraumes des Gehäuses 3 sowie des Fluidaufnahmeraumes des weiteren Gehäuses 7 der gleiche Druck herrscht, so dass die Kapselungswandung 2 differenzdruckentlastet ist.

In der Figur 5 ist ein Schnitt durch die Elektroenergieübertragungseinrichtung 1 gezeigt. Die Kapselungswandung 2 ist im Wesentlichen zylindrisch ausgebildet, wobei außenmantelseitig ein im Wesentlichen kreisringförmiger Abschnitt der Kapselungswandung 2 als metallischer Rahmen ausgebildet ist, welcher zwischen einander zugewandten stirnseitigen Enden des Gehäuses 3 sowie des weiteren Gehäuses 7 eingespannt ist. Die Kapselungswandung 2 begrenzt die Fluidaufnahmeräume des Gehäuses 3 sowie des weiteren Gehäuses 7. Weiterhin weist die Kapselungswandung 2 einen ringförmigen Isolierabschnitt auf, welcher zentrisch einen Armaturkörper 13 aufnimmt. Es kann auch die Verwendung mehrerer Armaturkörper 13 vorgesehen sein, welche im ringförmigen Isolierabschnitt verteilt angeordnet und voneinander elektrisch isoliert sind. Damit liegt eine elektrisch isolierende Kapselungswandung 2 vor. Der Armaturkörper 13 ist ein Teil eines Phasenleiters, der in Richtung der Längsachse 4 verläuft. Der Phasenleiter durchsetzt die Kapselungswandung 2. Der Armaturkörper 13 ist dabei fluiddicht in den ringförmigen Isolierabschnitt eingebettet. Ebenso ist der Isolierabschnitt fluiddicht in den metallischen Rahmen eingebettet. Entsprechend bildet die Kapselungswandung 2 eine fluiddichte Barriere, welche einen Fluidaufnahmeraum des Gehäuses 3 von einem Fluidaufnahmeraum des weiteren Gehäuses 7 separiert. Innerhalb der Fluidaufnahmeräume angeordnete Phasenleiterabschnitte 8 sind mittels Schraubverbindungen mit dem Armaturkörper 13 der Kapselungswandung 2 verbunden. Die Schraubverbindungen weisen Bolzen 14 auf, welche in Gewindeausnehmungen des Armaturkörpers 13 hineinragen. Mittels des Werkzeuges 10 kann ein Lösen der Bolzen 14 bzw. ein Anziehen der Bolzen 14 vorgenommen werden, so dass ein winkelsteifer Verbund zwischen Phasenleiterabschnitten 8 sowie der Kapselungswandung 2 hergestellt werden kann, bzw. aufgelöst werden kann. Ein Lösen bzw. Herstellen der Verbindung erfolgt im Schutz des die Kapselungswandung 2 und den Phasenleiterabschnitt 8 umgebenden Gehäuses 3.

Die Figur 6 zeigt eine Abwandlung des aus Figur 5 bekannten Schnittes. Der längenvariable Abschnitt 3a des Gehäuses 3 ist von der Kapselungswandung 2 entfernt. Ein radialer Zugriff auf den Phasenleiterabschnitt 8 ist möglich. Dieser Zustand wird im Regelfall bei (an)gelöster Verbindung zwischen Kapselungswandung 2 und Phasenleiterabschnitt 8 eingenommen.

## Patentansprüche

1. Demontage- oder Montageverfahren an einer druckfluidisolierten Elektroenergieübertragungseinrichtung (1) aufweisend eine Kapselungswandung (2) sowie einem an der Kapselungswandung (2) abstützbaren Phasenleiterabschnitt (8), wobei
- zum Verbinden/Lösen des Phasenleiterabschnitts (8) mit der/von der Kapselungswandung (2) ein Werkzeug (10) zum Verbinden/Lösen positioniert wird,
**dadurch gekennzeichnet, dass**
- vor einem Betätigen des Werkzeugs (10) eine Sicherheitszone (11) bezüglich einer Gefährdung durch ein Zerbersten der Kapselungswandung (2) festgelegt wird und dass
- eine Betätigung des Werkzeugs (10) von außerhalb der Sicherheitszone (11) erfolgt.

2. Demontage- oder Montageverfahren nach Anspruch 1,
**dadurch gekennzeichnet, dass** das Werkzeug (10) relativ zu Kapselungswandung (2) und/oder Phasenleiterabschnitt ausgerichtet wird.

3. Demontage- oder Montageverfahren nach Anspruch 1 oder 2,
**dadurch gekennzeichnet, dass** das Werkzeug (10) durch eine Öffnung (9) eines den Phasenleiterabschnitt (8) und/oder die Kapselungswandung (2) zumindest teilweise umgebenden Gehäuses (3) eingeführt wird.

4. Demontage- oder Montageverfahren nach Anspruch 3,
**dadurch gekennzeichnet, dass** vor einem Einführen des Werkzeugs (10) in die Öffnung (9) eine Druckentlastung des Gehäuses (3) vorgenommen wird.

5. Demontage- oder Montageverfahren nach einem der Ansprüche 1 bis 4,
**dadurch gekennzeichnet, dass** das Werkzeug (10) an einem Teil der zu demontierenden/montierenden Elektroenergieübertragungseinrichtung (1) abgestützt wird.

6. Demontage- oder Montageverfahren nach einem der Ansprüche 1 bis 5,
**dadurch gekennzeichnet, dass** nach einem Betätigen des Werkzeugs (10) zum Lösen von Phasenleiterabschnitt (8) und Kapselungswandung (2) das Gehäuse (3) zumindest abschnittsweise relativ zur Kapselungswandung (2) und/oder zum Phasenleiterabschnitt (8) bewegt, insbesondere entfernt, wird.

7. Demontage- oder Montageverfahren nach einem der Ansprüche 1 bis 6,
**dadurch gekennzeichnet, dass** vor einem Betätigen des Werkzeugs (10) zum Verbinden von Phasenleiterabschnitt (8) und Kapselungswandung (2) das Gehäuse (3) zumindest abschnittsweise relativ zur Kapselungswandung (2) und/oder zum Phasenleiterabschnitt (8) bewegt, insbesondere angenähert, wird.

8. Demontage- oder Montageverfahren nach einem der Ansprüche 1 bis 7,
**dadurch gekennzeichnet, dass** ein Verbinden oder Lösen des Phasenleiterabschnittes (8) mit oder von einer differenzdruckbelasteten Kapselungswandung (2), insbesondere einer elektrisch isolierenden Kapselungswandung (2), erfolgt.

## Claims

1. Disassembly or assembly method on a pressurized fluid-insulated electric power transmission device (1), having an enclosure wall (2) and a phase conductor section (8) which can be supported on the enclosure wall (2), wherein
- a connection/disconnection tool (10) is positioned for connecting/disconnecting the phase conductor section (8) to/from the enclosure wall (2),
**characterized in that**,
- before actuating the tool (10), a safety zone (11) with respect to a risk due to the enclosure wall (2) bursting is defined, and **in that**
- the tool (10) is operated from outside the safety zone (11) .

2. Disassembly or assembly method according to Claim 1, **characterized in that**
the tool (10) is oriented relative to the enclosure wall (2) and/or the phase conductor section.

3. Disassembly or assembly method according to Claim 1 or 2, **characterized in that**
the tool (10) is inserted through an opening (9) in a housing (3) which at least partially surrounds the phase conductor section (8) and/or the enclosure wall (2).

4. Disassembly or assembly method according to Claim 3, **characterized in that**
the housing (3) is relieved of pressure before the tool (10) is inserted into the opening (9).

5. Disassembly or assembly method according to one of Claims 1 to 4,
**characterized in that**
the tool (10) is supported on a part of the electric power transmission device (1) which is to be disassembled/assembled.

6. Disassembly or assembly method according to one of Claims 1 to 5,
**characterized in that**,
after the tool (10) is operated for disconnecting the phase conductor section (8) and the enclosure wall (2), the housing (3) is moved, in particular removed, relative to the enclosure wall (2) and/or the phase conductor section (8) at least in sections.

7. Disassembly or assembly method according to one of Claims 1 to 6,
**characterized in that**,
before the tool (10) is operated for connecting the phase conductor section (8) and the enclosure wall (2), the housing (3) is moved, in particular moved closer, relative to the enclosure wall (2) and/or the phase conductor section (8) at least in sections.

8. Disassembly or assembly method according to one of Claims 1 to 7,
**characterized in that**
the phase conductor section (8) is connected to or disconnected from a differential pressure-loaded enclosure wall (2), in particular an electrically insulating enclosure wall (2).

## Revendications

1. Procédé de démontage ou de montage d'un dispositif (1) de transport d'énergie électrique à isolation par du fluide sous pression, comportant une paroi (2) de blindage, ainsi qu'une partie (8) de conducteur de phase pouvant s'appuyer sur la paroi (2) de blindage, dans lequel
- pour relier la partie (8) de conducteur de phase à la paroi (2) de blindage ou pour l'en détacher, on met en place un outil (10) de liaison/détachement,
**caractérisé en ce que**
- avant un actionnement de l'outil (10), on fixe une zone (11) de sécurité en ce qui concerne une mise en danger par un éclatement de la paroi (2) de blindage et **en ce que**
- un actionnement de l'outil (10) s'effectue de l'extérieur de la zone (11) de sécurité.

2. Procédé de démontage ou de montage suivant la revendication 1,
**caractérisé en ce que**
l'on oriente l'outil (10) par rapport à la paroi (2) de blindage et/ou à la partie de conducteur de phase.

3. Procédé de démontage ou de montage suivant la revendication 1 ou 2,
**caractérisé en ce que**
l'on introduit l'outil (10) par une ouverture (9) d'une enveloppe (3) entourant au moins partiellement la partie (8) de conducteur de phase et/ou la paroi (2) de blindage.

4. Procédé de démontage ou de montage suivant la revendication 3,
**caractérisé en ce qu'**
avant d'introduire l'outil (10) dans l'ouverture (9), on effectue une décompression de l'enveloppe (3).

5. Procédé de démontage ou de montage suivant l'une des revendications 1 à 4,
**caractérisé en ce que**
l'on appuie l'outil (10) sur une partie du dispositif (1) de transport d'énergie électrique à démonter/monter.

6. Procédé de démontage ou de montage suivant l'une des revendications 1 à 5,
**caractérisé en ce qu'**
après un actionnement de l'outil (10) pour détacher la partie (8) de conducteur de phase et la paroi (2) de blindage, on déplace l'enveloppe (3), au moins par endroit, par rapport à la paroi (2) de blindage et/ou à la partie (8) de conducteur de phase, notamment en l'en éloignant.

7. Procédé de démontage ou de montage suivant l'une des revendications 1 à 6,
**caractérisé en ce que**,
avant un actionnement de l'outil (10), pour relier la partie (8) de conducteur de phase et la paroi (2) de blindage, on déplace l'enveloppe (3), au moins par endroit, par rapport à la paroi (2) de blindage et/ou la partie (8) de conducteur de phase, notamment en l'en rapprochant.

8. Procédé de démontage ou de montage suivant l'une des revendications 1 à 7,
**caractérisé en ce que**
l'on effectue une liaison de la partie (8) de conducteur de phase à une paroi (2) de blindage soumise à une différence de pression, notamment à une paroi (2) de blindage à isolation du point de vue électrique, ou on l'en détache.
